# EUROPÄISCHE PATENTSCHRIFT

(11) **EP 0 900 651 B1**
(45) Veröffentlichungstag und Bekanntmachung des Hinweises auf die Patenterteilung: **23.04.2003**
(21) Anmeldenummer: 98116075.7
(22) Anmeldetag: 26.08.1998
(51) Int. Cl.: B32B 27/10, B32B 27/30, C09J 133/08

(54) **Verwendung wässriger Polyacrylatdispersionen als Kaschierklebstoffe**
Use of aqueous polyacrylic dispersions as laminating adhesive
Utilisation de dispersions polyacrylique aqueuses comme adhésif pour stratifiés

(30) Priorität: 02.09.1997 DE 19738185
(43) Veröffentlichungstag der Anmeldung: 10.03.1999
(73) Patentinhaber: BASF AKTIENGESELLSCHAFT, 67056 Ludwigshafen (DE)
(72) Erfinder: Dames, Burkhardt, Dr., 67069 Ludwigshafen (DE); Schumacher, Karl-Heinz, Dr., 67433 Neustadt (DE); Fricke, Hans-Joachim, 67246 Dirmstein (DE)

(56) Entgegenhaltungen:
- DATABASE WPI Section Ch, Week 7526 Derwent Publications Ltd., London, GB; Class L02, AN 75-43234W XP002089008 & JP 49 096005 A (SHINAGAWA KAKO FIRE) , 11. September 1974
- DATABASE WPI Section Ch, Week 8133 Derwent Publications Ltd., London, GB; Class A14, AN 81-59798D XP002089009 & JP 56 080451 A (MITSUI TOATSU CHEM INC) , 1. Juli 1981
- DATABASE WPI Section Ch, Week 9016 Derwent Publications Ltd., London, GB; Class A14, AN 90-120305 XP002089010 & JP 02 070777 A (NITTO DENKO CORP) , 9. März 1990
- CHEMICAL ABSTRACTS, vol. 103, no. 8, 26. August 1985 Columbus, Ohio, US; abstract no. 55127x, Seite 52; XP002089007 & JP 60 060171 A (JAPAN SYNTH. RUBBER KK)

## Beschreibung

Die Erfindung betrifft ein Verfahren zur Herstellung von Laminaten durch Verkleben von großflächigen Substraten.

Bei diesen Klebeverfahren werden Polymerisate als Klebstoffe, hier Kaschierklebstoffe genannt, verwandt. Die Verklebung von Papier oder Karton mit transparenten Polymerfolien wird auch Glanzfolienkaschierung genannt.
Aus EP-A-148386 sind Klebstoffe für die Glanzfolienkaschierung bekannt, welche aus einer wäßrigen Polymerdispersion und einem zusätzlichen Vernetzer für das Polymer bestehen. Es handelt sich um ein sogenanntes 2 Komponenten (2K)-System, da der Klebstoff aus 2 Komponenten besteht, die bei der Anwendung miteinander reagieren müssen.
Gewünscht sind demgegenüber 1-Komponenten (1K)-Systeme, welche eine derartige Reaktion mit einer 2. Komponente nicht benötigen.

1-Komponenten System als Klebstoffe für die Glanzfolienkaschierung sind z.B. in der EP-A622434 und WO 92/12213 beschrieben. Diese Klebstoffe enthalten zwingend Sulfonsäure- oder Sulfonatgruppen -enthaltende Monomere.

In der deutschen nicht vorveröffentlichten Patentanmeldung P. 19649383.8 sind ebenfalls Kaschierklebstoffe beschrieben. In JP-2070777 wird die Verwendung eines Ethylacrylat/Butylacrylatcopolymeren als Luft enthaltende Klebstoffschicht zwischen 2 Stahlplatten beschrieben.

Aufgabe der Erfindung waren alternative 1K-Klebstoffe für die Glanzfolienkaschierung, welche auch ohne Sulfonsäure oder Sulfonatgruppen enthaltende Monomere gute Klebeeigenschaften haben und zu einem guten Glanz der Verklebungen führen.

Demgemäß wurde ein Verfahren zum Verkleben von Papier mit transparenten Polymerfolien oder Karton mit transparenten Polymerfolien, dadurch gekennzeichnet, daß als Klebstoff eine wäßrige Dispersion eines Polymerisats aufgebaut aus
- 5 bis 95 Gew.-%: eines C₄-Alkylacrylats
- 5 bis 95 Gew.-%: eines C₁ oder C₂ Alkylacrylats,
- 0 bis 50 Gew.-%: eines sogenannten Hauptmonomeren ausgewählt aus C₁-C₂ Alkylmethacrylaten, C₄-Alkylmethacrylaten, C₃- und C₅-C₁₆ Alkylacrylaten oder -Alkylmethacrylaten, Vinylaromaten und Vinylestern von bis zu 20 C-Atome enthaltenden Carbonsäuren,
- 0 bis 20 Gew.-%: sogenannten Hilfsmonomere ausgewählt aus ethylenisch ungesättigten Säuren, Säureanhydriden, ethylenisch ungesättigten Nitrilen oder Amiden und ethylenisch ungesättigten Verbindungen mit einer Hydroxylgruppe und
- 0 bis 20 Gew.-%: weiteren Monomeren verwendet wird,
gefunden.

Gefunden wurde entsprechend auch die Verwendung der vorstehenden wäßrigen Polymerdispersion als Kaschierklebstoff, insbesondere Glanzfolienkaschierklebstoff.

Das in dem erfindungsgemäßen Verfahren verwendete Polymerisat ist aufgebaut aus einem C₄-Alkylacrylat, einem C₁ oder C₂-Alkylacrylat und gegebenenfalls aus sogenannten Hauptmonomeren, Hilfsmonomeren und weiteren Monomeren.

Bei dem C₄-Alkylacrylat handelt es sich vorzugsweise um n-Butylacrylat. Bei dem C₁- oder C₂ Alkylacrylat handelt es sich um Methyl- oder Ethylacrylat, oder deren Mischungen, insbesondere um Methylacrylat.

Bei den Haumptmonomeren handelt es sich vorzugsweise um Methylmethacrylat, Ethylmethacrylat, C₄ Alkylmethacrylate, insbesondere um n-Butylmethacrylat, Styrol, Vinylacetat oder Vinylpropionat.

Hilfsmonomere können z.B. ethylenisch ungesättigte Monomere mit Carbonsäuregruppen wie (Meth)acrylsäure, Maleinsäure, ethylenisch ungesättigte Säureanhydride oder Halbester, wie Maleinsäureanhydrid oder Maleinsäure- bzw. Fumarsäurehalbester sein. Monomere mit Sulfonsäure- oder Sulfonatgruppen kommen in Betracht, sind jedoch keineswegs erforderlich.
Weiterhin kann es sich bei dem Hilfsmonomeren um (Meth)acrylnitril (Meth)acrylamid oder C₁-C₁₀ Hydroxyalkyl(meth)acrylate handeln.

### Bevorzugt ist Acrylsäure.

Weitere Monomere können z.B. Vinylhalogenide, wie Vinylchlorid oder Vinylidenchlorid, oder alipatische Kohlenwasserstoffe wie Ethen, Propen, Isopren oder Butadien sein.

Weitere Monomere werden im allgemeinen nicht mitverwendet. Der Anteil der C₄- und C₁- bzw. C₂-Alkylacrylate beträgt zusammen vorzugsweise über 60, insbesondere über 70 oder 80 Gew.-%.

Das Polymerisat besteht z.B. vorzugsweise aus
- 15 bis 85 Gew.-%: C₄-Alkylacrylat
- 15 bis 85 Gew.-%: C₁ oder C₂ Alkylacrylat
- 0 bis 30 Gew.-%: Hauptmonomere
- 0 bis 10 Gew.-%: Hilfsmonomere
- 0 bis 10 Gew.-%: weitere Monomere
besonders bevorzugt aus
- 20 bis 80 Gew.-%: C₄-Alkylacrylat
- 20 bis 80 Gew.-%: C₁ oder C₂ Alkylacrylat
- 0 bis 10 Gew.-%: Hauptmonomere
- 0 bis 5 Gew.-%: Hilfsmonomere
- 0 bis 5 Gew.-%: weitere Monomere
und ganz besonders bevorzugt aus
- 50 bis 80 Gew.-%: C₄-Alkylacrylat
- 20 bis 50 Gew.-%: C₁ oder C₂ Alkylacrylat
- 0 bis 5 Gew.-%: Hauptmonomere
- 0 bis 4 Gew.-%: Hilfsmonomere
- 0 bis 4 Gew.-%: weitere Monomere

Die Glasübergangstemperatur des Polymerisats läßt sich nach üblichen Methoden wie Differentialthermoanalyse oder Differential Scanning Calorimetrie (s. z.B. ASTM 3418/82, sog. "midpoint temperature") bestimmen.

Die Glasübergangstemperatur des Polymerisats liegt bevorzugt unter 60°C, insbesondere beträgt sie -50 bis +60°C, besonders bevorzugt -30 bis +40°C und ganz besonders bevorzugt -30 bis +20°C.

Die Herstellung des Polymeren erfolgt vorzugsweise durch Emulsionspolymerisation, es handelt sich daher um ein Emulsionspolymerisat.

Die Herstellung kann jedoch z.B. auch durch Lösungspolymerisation und anschließende Dispergierung in Wasser erfolgen.

Bei der Emulsionspolymerisation werden ionische und/oder nichtionische Emulgatoren und/oder Schutzkolloide bzw. Stabilisatoren als grenzflächenaktive Verbindungen verwendet.

Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Als Emulgatoren kommen sowohl anionische, kationische als auch nichtionische Emulgatoren in Betracht. Vorzugsweise werden als begleitende grenzflächenaktive Substanzen ausschließlich Emulgatoren eingesetzt, deren Molekulargewichte im Unterschied zu den Schutzkolloiden üblicherweise unter 2000 g/mol liegen. Selbstverständliche müssen im Falle der Verwendung von Gemischen grenzflächenaktiver Substanzen die Einzelkomponenten miteinander verträglich sein, was im Zweifelsfall an Hand weniger Vorversuche überprüft werden kann. Vorzugsweise werden anionische und nichtionische Emulgatoren als grenzflächenaktive Substanzen verwendet. Gebräuchliche begleitende Emulgatoren sind z.B. ethoxylierte Fettalkohole (EO-Grad: 3 bis 50, Alkylrest; C₈bis C₃₆), ethoxylierte Mono-, Di- und Tri-Alkylphenole (EO-Grad: 3 bis 50, Alkylrest: C₄- bis C₉), Alkalimetallsalze von Dialkylestern der Sulfobernsteinsäure sowie Alkali- und Ammoniumsalze von Alkylsulfaten (Alkylrest: C₈- bis C₁₂), von ethoxylierten Alkanolen (EO-Grad: 4 bis 30, Alkylrest: C₁₂- bis C₁₈), von ethoxylierten Alkylphenolen (EO-Grad: 3 bis 50, Alkylrest: C₄bis C₉), von Alkylsulfonsäuren (Alkylrest: C₁₂- bis C₁₈) und von Alkylarylsulfonsäuren (Alkylrest: C₉- bis C₁₈).

Weitere geeignete Emulgatoren sind Verbindungen der allgemeinen Formel II 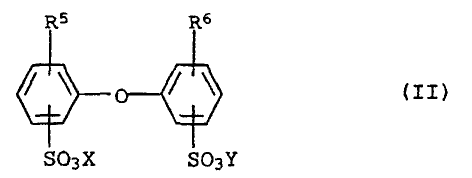 worin R⁵ und R⁶ Wasserstoff oder C₄- bis C₁₄-Alkyl bedeuten und nicht gleichzeitig Wasserstoff sind, und X und Y Alkalimetallionen und/oder Ammoniumionen sein können. Vorzugsweise bedeuten R⁵, R⁶ lineare oder verzweigte Alkylreste mit 6 bis 18 C-Atomen oder Wasserstoff und insbesondere mit 6, 12 und 16 C-Atomen, wobei R⁵ und R⁶ nicht beide gleichzeitig Wasserstoff sind. X und Y sind bevorzugt Natrium, Kalium oder Ammoniumionen, wobei Natrium besonders bevorzugt ist. Besonders vorteilhaft sind Verbindungen II in denen X und Y Natrium, R⁵ ein verzweigter Alkylrest mit 12 C-Atomen und R⁶ Wasserstoff oder R⁵ ist. Häufig werden technische Gemische verwendet, die einen Anteil von 50 bis 90 Gew.-% des monoalkylierten Produktes aufweisen, beispielsweise Dowfax® 2A1 (Warenzeichen der Dow Chemical Company).

Geeignete Emulgatoren finden sich auch in Houben-Weyl, Methoden der organischen Chemie, Band 14/1, Makromolekulare Stoffe, Georg Thieme Verlag, Stuttgart, 1961, Seiten 192 bis 208.

Handelsnamen von Emulgatoren sind z.B. Dowfax® 2 A1, Emulan® NP 50, Dextrol® OC 50, Emulgator 825, Emulgator 825 S, Emulan® OG, Texapon® NSO, Nekanil® 904 S, Lumiten® I-RA, Lumiten E 3065, Disponil FES 77, Lutensol AT 18, Steinapol VSL, Emulphor NPS 25.

Die grenzflächenaktive Substanz wird üblicherweise in Mengen von 0,1 bis 10 Gew.-%, bezogen auf die zu polymerisierenden Monomeren verwendet.

Wasserlösliche Initiatoren für die Emulsionspolymerisation sind z.B. Ammonium- und Alkalimetallsalze der Peroxidischwefelsäure, z.B. Natriumperoxodisulfat, Wasserstoffperoxid oder organische Peroxide, z.B. tert-Butylhydroperoxid.

Geeignet sind insbesondere sogenannte Reduktions-, Oxidations(Red-Ox)-Initiator Systeme.

Die Red-Ox-Initiator-Systeme bestehen aus mindestens einem meist anorganischem Reduktionsmittel und einem anorganischen oder organischen Oxidationsmittel.

Bei der Oxidationskomponente handelt es sich z.B. um die bereits vorstehend genannten Initiatoren für die Emulsionspolymerisation.

Bei der Reduktionskomponenten handelt es sich z.B. um Alkalimetallsalze der schwefligen Säure, wie z.B. Natriumsulfit, Natriumhydrogensulfit, Alkalisalze der Dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden.

Übliche Red-Ox-Initiator-Systeme sind z.B. Ascorbinsäure/Eisen-(II) sulfat/Natriumperoxidisulfat, tert-Butylhydroperoxid/Natriumdisulfit, tert-Butylhydroperoxid/Na-Hydroxymethansulfinsäure. Die einzelnen Komponenten, z.B. die Reduktionskomponente, können auch Mischungen sein z.B. eine Mischung aus dem Natriumsalz der Hydroxymethansulfinsäure und Natriumdisulfit.

Die genannten Verbindungen werden meist in Form wäßrigen Lösungen eingesetzt, wobei die untere Konzentration durch die in der Dispersion vertretbare Wassermenge und die obere Konzentration durch die Löslichkeit der betreffenden Verbindung in Wasser bestimmt ist. Im allgemeinen beträgt die Konzentration 0,1 bis 30 Gew.-%, bevorzugt 0,5 bis 20 Gew.-%, besonders bevorzugt 1,0 bis 10 Gew.-%, bezogen auf die Lösung.

Die Menge der Initiatoren beträgt im allgemeinen 0,1 bis 10 Gew.-%, bevorzugt 0,5 bis 5 Gew.-%, bezogen auf die zu polymerisierenden Monomeren. Es können auch mehrere, verschiedene Initiatoren bei der Emulsionspolymerisation Verwendung finden.

Bei der Polymerisation können Regler eingesetzt werden, z.B. in Mengen von 0 bis 0,8 Gew.-Teile, bezogen auf 100 Gew.-Teile der zu polymerisierenden Monomeren, durch die die Molmasse verringert wird. Geeignet sind z.B. Verbindungen mit einer Thiolgruppe wie tert.-Butylmercaptan, Thioglycolsäureethylacrylester, Mercaptoethanol, Mercaptopropyltrimethoxysilan oder tert.-Dodecylmercaptan. Der Anteil dieser Regler kann im Falle der Verwendung als Klebstoff für die Verbundfolienkaschierung insbesondere 0,05 bis 0,8 Gew.-Teile, bevorzugt 0,1 bis 0,5 Gew.-Teile bezogen auf 100 Gew.-Teile der zu polymerisierenden Monomeren betragen. Im Falle der Verwendung als Klebstoff für die Glanzfolienkaschierung ist die Mitverwendung eines Reglers weniger bevorzugt. Die Regler enthalten keine polymerisierbare, ethylenisch ungesättigte Gruppe. Die Regler bewirken einen Abbruch der Polymerisationskette und werden daher endständig an die Polymerketten gebunden.

Die Emulsionspolymerisation erfolgt in der Regel bei 30 bis 130, vorzugsweise 50 bis 90°C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozeß als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt. Bei der Polymerisation kann auch z.B. zur besseren Einstellung der Teilchengröße eine Polymersaat vorgelegt werden.

Die Art und Weise, in der der Initiator im Verlauf der radikalischen wäßrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wäßrigen Emulsionspolymerisation kontinuierlich oder stufenweise eingesetzt werden. Im einzelnen hängt dies in an sich dem Durchschnittsfachmann bekannter Weise sowohl von der chemischen Natur des Initiatorsystems als auch von der Polymerisationstemperatur ab. Vorzugsweise wird ein Teil vorgelegt und der Rest nach Maßgabe des Verbrauchs der Polymerisationszone zugeführt.

Zur Entfernung der Restmonomeren wird üblicherweise auch nach Ende der eigentlichen Emulsionspolymerisation, d.h. nach einem Umsatz der Monomeren von mindestens 95 %, Initiator zugesetzt.

Die einzelnen Komponenten können dem Reaktor beim Zulaufverfahren von oben, in der Seite oder von unten durch den Reaktorboden zugegeben werden.

Bei der Emulsionspolymerisation werden wäßrige Dispersionen des Polymeren in der Regel mit Feststoffgehalten von 15 bis 75 Gew.-%, bevorzugt von 40 bis 75 Gew.-% erhalten.

Für eine hohe Raum/Zeitausbeute des Reaktors sind Dispersionen mit einem möglichst hohen Feststoffgehalt bevorzugt. Um Feststoffgehalte > 60 Gew.-% erreichen zu können, sollte man eine bi- oder polymodale Teilchengröße einstellen, da sonst die Viskosität zu hoch wird, und die Dispersion nicht mehr handhabbar ist. Die Erzeugung einer neuen Teilchengeneration kann beispielsweise durch Zusatz von Saat (EP 81083), durch Zugabe überschüssiger Emulgatormengen oder durch Zugabe von Miniemulsionen erfolgen. Ein weiterer Vorteil, der mit der niedrigen Viskosität bei hohem Feststoffgehalt einhergeht, ist das verbesserte Beschichtungsverhalten bei hohen Feststoffgehalten. Die Erzeugung einer neuen/neuer Teilchengeneration/en kann zu einem beliebigen Zeitpunkt erfolgen. Er richtet sich nach den für eine niedrige Viskosität angestrebten Teilchengrößenverteilung.

Die Dispersion eignet sich als Kaschierklebstoff zum Verkleben von großflächigen Substraten, d.h. zur Herstellung von Laminaten.

Der Dispersion kann für die Verwendung als Kaschierklebstoff weitere übliche Zusatzstoffe, z.B.
Netzmittel, Verdicker, Schutzkolloide, Lichtschutz-Stabilisatoren, Biozide enthalten.

Das Polymerisat bzw. die Dispersion benötigt nicht den Zusatz von weichmachenden Harzen (Tackifiern) von Weichmachern und auch nicht den Zusatz von Vernetzern, sonstigen Reaktivkomponenten oder Mischungskomponenten um die gewünschten Eigenschaften bei der Verwendung als Klebstoff zu erreichen.

Bei der Verwendung als Kaschierklebstoff wird die erfindungsgemäße Dispersion auf die großflächigen Substrate vorzugsweise mit einer Schichtdicke von 0,1 bis 20, besonders bevorzugt 2 bis *7* g/m² z.B. durch Rakeln, Streichen etc. aufgetragen.

Nach kurzer Zeit zur Ablüftung des Dispersionswasser (vorzugsweise nach 1 bis 60 Sekunden) kann die das beschichtete Substrat dann mit einem zweiten Substrat kaschiert werden, wobei die Temperatur z.B. 20 bis 200, vorzugsweise 20 bis 70°C und der Druck z.B. 1 bis 30, vorzugsweise 3 bis 20 N/m² betragen kann.

Als Substrate eignen sich z.B. Polymerfolien, insbesondere aus Polyethylen, orientiertem Polypropylen, Polyamid, Polyethylenterephthalat, Celluloseacetat, Zellglas, mit Metall (z.B. Aluminium beschichtete (bedampfte) Polymerfolien (kurz: metallisierte Folien) oder auch Papier, Karton oder Metallfolien, insbesondere aus Aluminium. Die genannten Folien können auch z.B. mit Druckfarben bedruckt sein.

Das Polymerisat bzw. die Dispersion wird als Klebstoff für die Glanzfolienkaschierung verwendet.

Bei der Glanzfolienkaschierung werden Papier oder Karton mit transparenten Polymerfolien verklebt.

Die wäßrigen Dispersionen haben gute Klebeeigenschaften, insbesondere auch bei der Glanzfolienkaschierung. Bei der Glanzfolienkaschierung ist vor allem eine gute Haftung der transparenten Polymerfolien auf Papier oder Karton von Bedeutung. Die Polymerfolie muß auch im Bereich von Nuten gut haften und darf sich nicht vom Papier oder Karton ablösen.
Insbesondere ist natürlich auch ein hoher Glanz gewünscht.
All diese Erfordernisse werden im Falle des erfindungsgemäßen Verfahrens bzw. bei der erfindungsgemäßen Verwendung erfüllt.

### Beispiele

### A) Herstellung von Polymerdispersionen

Die Herstellung erfolgt nach folgender allgemeiner Vorschrift:

Die Vorlage (250 g Wasser und 3 g einer Styrolsaat (33 %ig) mit einem mittleren Teilchendurchmesser von 30 nm) wurde auf 85°C Innentemperatur aufgeheizt und 5 % Zulauf 2 vorgelegt. Nach 10 min Wartezeit wurden Zulauf 1 und Zulauf 2 gestartet.

Zulauf 2 bestand aus 3.0 g Natriumperoxodisulfat gelöst in 39,9 g Wasser.
Die Zusammensetzung von Zulauf 1 ist in den Tabellen 1 - 3 angegeben.

Zulauf 1 und 2 wurden in 3 h zudosiert und 0,5 h nachpolymerisiert.

Die Proben wurden vor der anwendungstechnischen Prüfung neutralisiert

**Tabelle 1**

| Zulauf 1 (erfindungsgemäße Dispersionen) | | | | | | |
|---|---|---|---|---|---|---|
| Nr. | H₂O [g] | BA [g] | MA [g] | AS [g] | Dow(45 %ig) [g] | IRA(50 %ig) [g] |
| 1 | 537,8 | 780 | 200 | 20 | 8,9 | 12 |
| 2 | 537,8 | 730 | 250 | 20 | 8,9 | 12 |
| 3 | 537,8 | 680 | 300 | 20 | 8,9 | 12 |
| 4 | 537,8 | 630 | 350 | 20 | 8,9 | 12 |
| 5 | 537,8 | 580 | 400 | 20 | 8,9 | 12 |
| 6 | 537,8 | 530 | 450 | 20 | 8,9 | 12 |
| 7 | 537,8 | 480 | 500 | 20 | 8,9 | 12 |
| 8 | 537,8 | 430 | 550 | 20 | 8,9 | 12 |
| 9 | 537,8 | 380 | 600 | 20 | 8,9 | 12 |

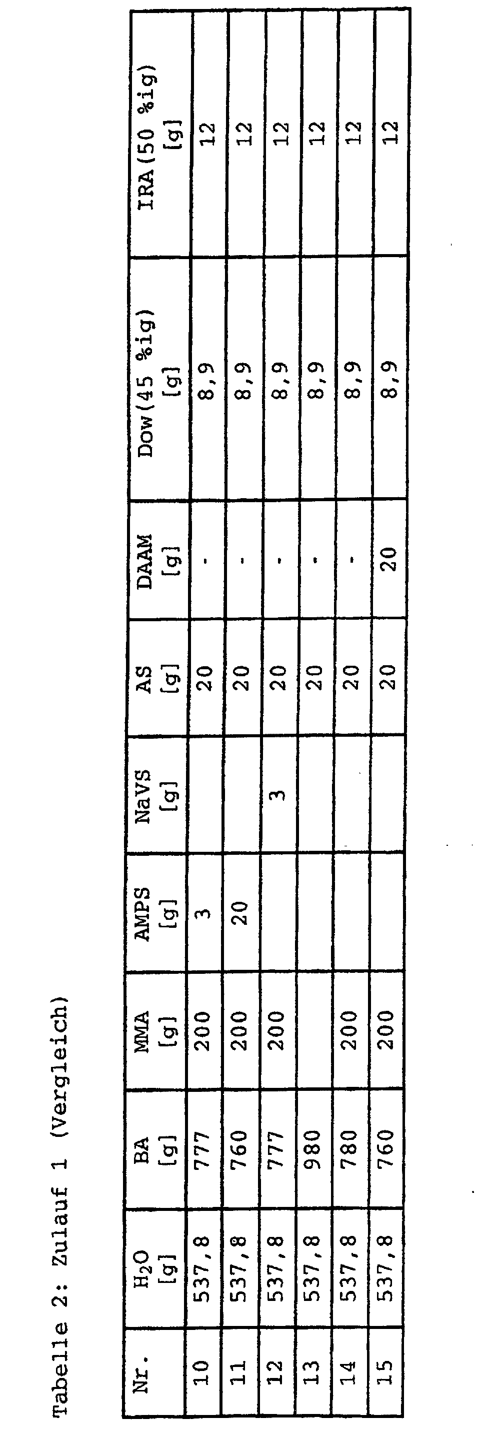

Bei dem Versuch 15 wurde ADDH (10 g) nach Ende der Polymerisation zugegeben

Abkürzungen:
- Dow:: Dowfax® A1, anionischer Emulgator der Firma DOW
- IRA:: Lumiten® I-RA, anionischer Emulgator der Firma BASF
- BA:: n-Butylacrylat
- MA:: Methylacrylat
- MMA:: Methylmethacrylat
- AS:: Acrylsäure
- DAAM:: Diacetonacrylamid
- NaVS:: Natriumvinylsulfonat
- AMPS:: Acrylamidopropansulfonsäure
- ADDH:: Adipinsäuredihydrazid (Vernetzer, der mit Carbonylgruppen vernetzt)

### B) Glanzfolienkaschierung

Glanzfolienkaschierung mit Karton (Cromoduplex-Karton) und Polypropylen (Corona-vorbehandelt) und mit Karton und Celluloseacetatfolie

Die vorbehandelte Seite der Polypropylenfolie (PP) wurde mit Klebstoff beschichtet. Nach dem Trocknen mit Kaltluft wurde der Karton aufgelegt und mit einer Laborkaschierrolle angerollt. Die zugeschnittenen Kaschierungen wurden in der Rollenpresse gepreßt.

Die Haftung wurde durch Abziehen der Folie vom Karton im Winkel von ca. 180 Grad geprüft.

| | | |
|---|---|---|
| Auswertung | 1 = | Vollflächiger Papier- oder Farbausriß |
| | 2 = | Teilweiser Papier- oder Farbausriß |
| | 3 = | Gute Haftung mit Adhäsionsbruch Karton oder Folie (AK, AF) |
| | 4 = | Schwache Haftung mit AK oder AF |
| | 5 = | Keine Haftung auf Karton oder Folie |

Zur Bestimmung der Nutstandfestigkeit wurden die kaschierten Proben 24 Stunden nach der obigen Herstellung genutet.

| Beurteilung der Nutung: | |
|---|---|
| 1 = | Nut ist vollständig in Ordnung |
| 2 = | Nut ist nur an vereinzelten Stellen leicht geöffnet |
| 3 = | Nut ist an einzelnen Stellen deutlich geöffnet |
| 4 = | Nut ist vollständig offen |

Die gleiche Prüfung wurde mit Polyacetatfolie durchgeführt.

Die Ergebnisse sind in den Tabellen 3 und 4 (erfindungsgemäß) und 5 und 6 (Vergleich) aufgelistet.

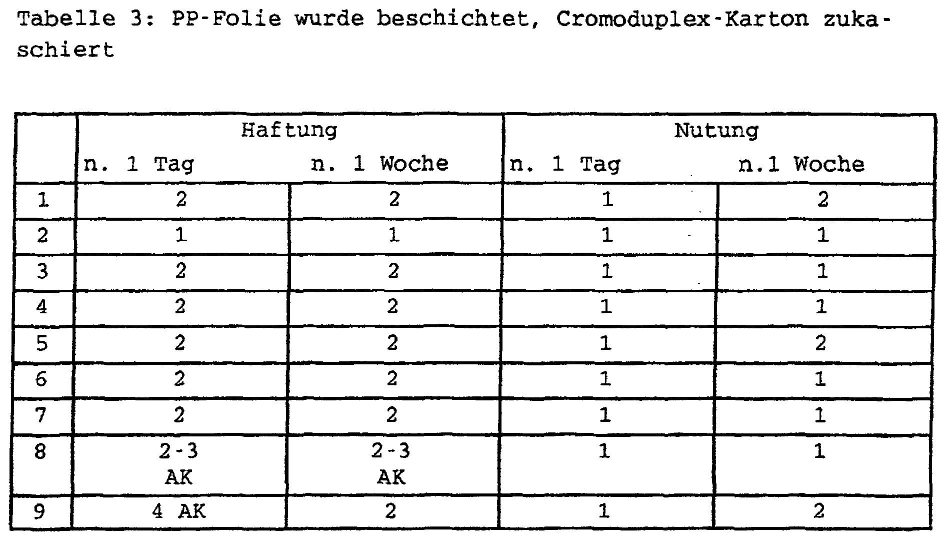

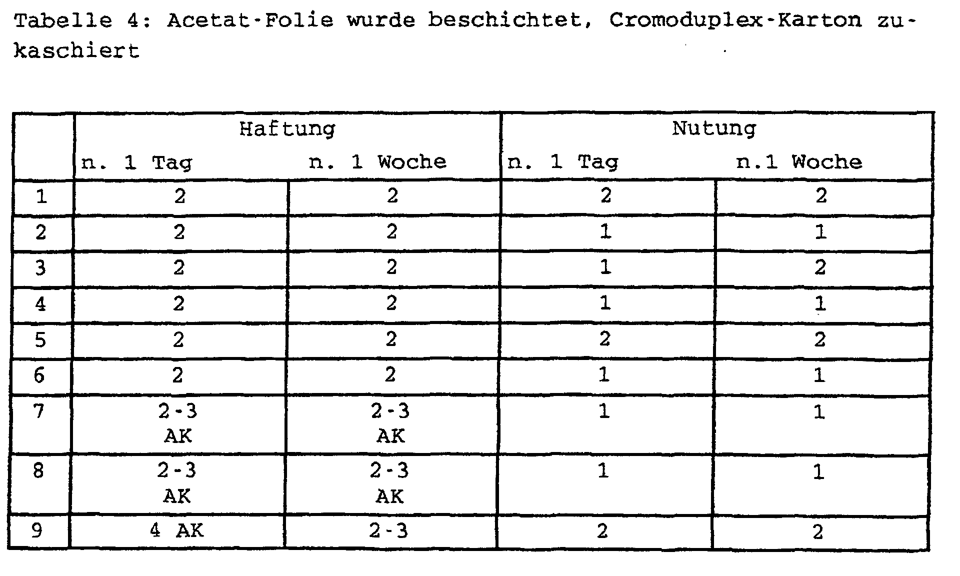

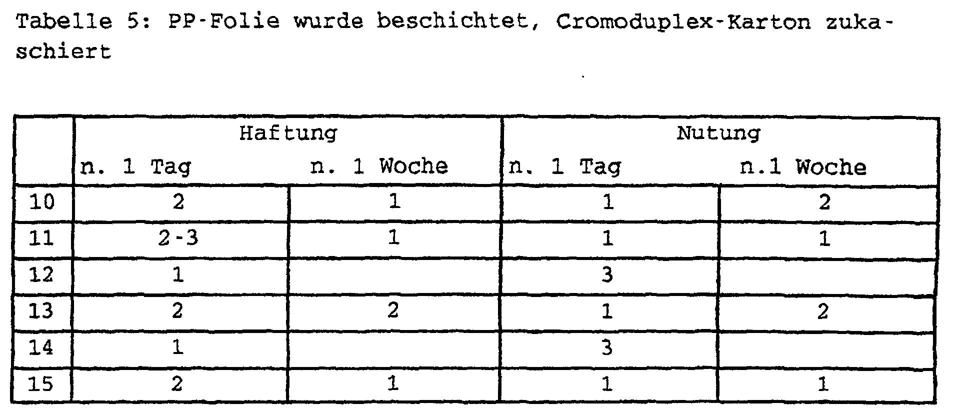

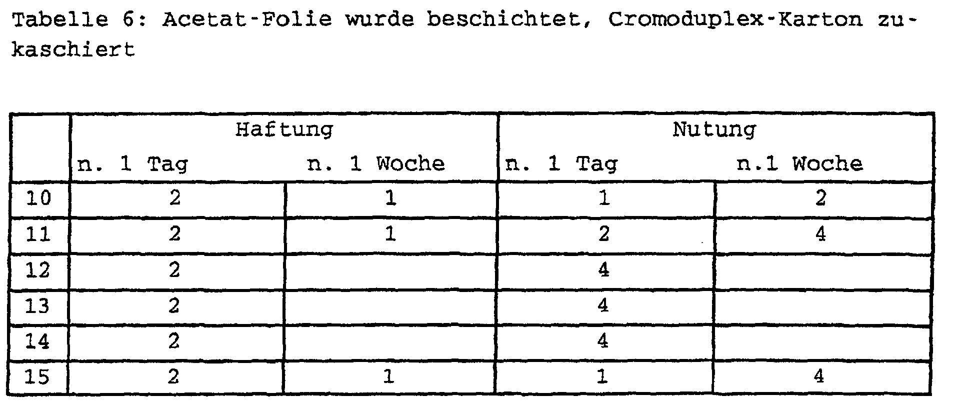

## Patentansprüche

1. Verfahren zum Verkleben von Papier mit transparenten Polymerfolien oder von Karton mit transparenten Polymerfolien, **dadurch gekennzeichnet, daß** als Klebstoff eine wäßrige Dispersion eines Polymerisats aufgebaut aus
5 bis 95 Gew.-% eines C₄-Alkylacrylats
5 bis 95 Gew.-% eines C₁ oder C₂ Alkylacrylats,
0 bis 50 Gew.-% eines sogenannten Hauptmonomeren ausgewählt aus C₁-C₂ Alkylmethacrylaten, C₄-Alkylmethacrylaten, C₃- und C₅-C₁₆ Alkylacrylaten oder -Alkylmethacrylaten, Vinylaromaten und Vinylestern von bis zu 20 C-Atome enthaltenden Carbonsäuren,
0 bis 20 Gew.-% sogenannten Hilfsmonomere ausgewählt aus ethylenisch ungesättigten Säuren, Säureanhydriden, ethylenisch ungesättigten Nitrilen oder Amiden und ethylenisch ungesättigten Verbindungen mit einer Hydroxylgruppe und
0 bis 20 Gew.-% weiteren Monomeren verwendet wird.

2. Verfahren gemäß Anspruch 1, **dadurch gekennzeichnet, daß** das Polymerisat aufgebaut ist aus
15 bis 85 Gew.-% eines C₄ Alkylacrylats
15 bis 85 Gew.-% eines C₁ oder C₂ Alkylacrylats
0 bis 30 Gew.-% eines Hauptmonomeren
0 bis 10 Gew.-% eines Hilfsmonomeren
0 bis 10 Gew.-% eines weiteren Monomeren

3. Verfahren gemäß Anspruch 1 oder 2, **dadurch gekennzeichnet, daß** es sich beim Klebstoff um ein Ein-Komponenten System handelt, welches keinen Vernetzer für das Polymerisat benötigt.

4. Laminate erhältlich nach einem Verfahren gemäß der Ansprüche 1 bis 3.

## Claims

1. A process for bonding paper with transparent polymer films or for bonding card with transparent polymer films, which comprises using as adhesive an aqueous dispersion of a polymer built up from
from 5 to 95% by weight of a C₄-alkyl acrylate
from 5 to 95% by weight of a C₁- or C₂-alkyl acrylate,
from 0 to 50% by weight of a monomer termed a main monomer and selected from the class consisting of C₁-C₂-alkyl methacrylates, C₄-alkyl methacrylates, C₃-alkyl and C₅-C₁₆-alkyl acrylates or -alkyl methacrylates, vinylaromatics and vinyl esters of carboxylic acids containing up to 20 carbon atoms,
from 0 to 20% by weight of monomers termed secondary monomers selected from the class consisting of ethylenically unsaturated acids, anhydrides and ethylenically unsaturated nitriles, or that consisting of amides and ethylenically unsaturated compounds with a hydroxyl group, and
from 0 to 20% by weight of other monomers.

2. A process as claimed in claim 1, wherein the polymer is built up from
from 15 to 85% by weight of a C₄-alkyl acrylate
from 15 to 85% by weight of a C₁- or C₂-alkyl acrylate,
from 0 to 30% by weight of a main monomer,
from 0 to 10% by weight of a secondary monomer and
from 0 to 10% by weight of another monomer.

3. A process as claimed in claim 1 or 2, wherein the adhesive is a single-component system which does not need a crosslinking agent for the polymer.

4. A laminate obtainable by a process as claimed in any of claims 1 to 3.

## Revendications

1. Procédé de collage de papier avec des feuilles transparentes polymères ou de carton avec des feuilles transparentes polymères, **caractérisé en ce que** l'on utilise comme adhésif une dispersion aqueuse d'un polymère constitué de
5 à 95% en poids d'un acrylate d'alkyle en C₄
5 à 95% en poids d'un acrylate d'alkyle en C₁ ou C_{2,}
0 à 50% en poids d'un monomère dit principal, choisi parmi des méthacrylates d'alkyle en C₁ - C₂, des méthacrylates d'alkyle en C₄, des acrylates d'alkyle ou des méthacrylates d'alkyle en C₃ et en C₅ - C₁₆, des vinylaromatiques et des esters vinyliques d'acides carboxyliques comportant jusqu'à 20 atomes de C,
0 à 20% en poids de monomères dits auxiliaires, choisis parmi des acides, anhydrides d'acides éthyléniquement insaturés, des nitriles ou amides éthyléniquement insaturés et des composés éthyléniquement insaturés avec un groupe hydroxyle et
0 à 20% en poids d'autres monomères.

2. Procédé selon la revendication 1, **caractérisé en ce que** le polymère est constitué de
15 à 85% en poids d'un acrylate d'alkyle en C₄
15 à 85% en poids d'un acrylate d'alkyle en C₁ ou C₂
0 à 30% en poids d'un monomère principal
0 à 10% en poids d'un monomère auxiliaire
0 à 10% en poids d'un autre monomère.

3. Procédé selon la revendication 1 ou 2, **caractérisé en ce que** l'adhésif est un système monocomposant, qui ne nécessite par de réticulant pour le polymère.

4. Produits laminés que l'on peut obtenir par un procédé selon les revendications 1 à 3.
